# EUROPEAN PATENT APPLICATION

(11) **EP 3 506 122 A1**
(43) Date of publication of application: **03.07.2019**
(21) Application number: 18215909.5
(22) Date of filing: 26.12.2018
(51) Int. Cl.: G06F 16/51

(54) **SECURITY INSPECTION SYSTEM AND METHOD THEREOF**

(30) Priority: 27.12.2017 CN 201711452018
(71) Applicant: Nuctech Company Limited, TongFang Building, Shuangqinglu, Haidian District Beijing 100084 (CN)
(72) Inventor: CHEN, Zhiqiang, Beijing, 100084 (CN); LI, Yuanjing, Beijing, 100084 (CN); WU, Xianghao, Beijing, 100084 (CN); ZHAO, Shaozhi, Beijing, 100084 (CN)
(74) Representative: Stiel, Jürgen

(57) **Abstract**

A security inspection system and method thereof are disclosed. At least one inspection sub-system is configured to perform a ray scanning on an object to be inspected, and obtain a radiographic image data of the object. At least one local computer is communicatively coupled to the at least one inspection sub-system, and configured to store the radiographic image data. The at least one local computer is further configured to divide the radiographic image data into a plurality of sub-regions according to a predefined pattern, store image data of respective sub-region in columns, and store information indicating relationships between respective sub-regions.

## Description

### TECHNICAL FIELD

Embodiments of the present invention relate to the field of security inspection, in particular, to storage and reading of radiographic image of an inspected object such as a container truck.

### BACKGROUND

Radiographic imaging technology is a technology which scans an object with a radioactive ray, such as an X-ray, receives the X-rays that transmits through the object, and converts it into an electrical signal by using a detector. After the electrical signal is converted to a digital signal by an analog/digital converter, it is input to a computer for processing. The scanned data is calculated to obtain an X-ray attenuation coefficient (also referred to as an absorption coefficient) of each voxel, which is arranged in a matrix form, that is, a digital matrix. Each digit in the digital matrix is converted into a small square with a gray scale ranging from black to white by a digital/analog converter (referred as a pixel), and arranged in the original matrix order to form a radiographic image. Therefore, an X-ray image is a gray scale image composed of a certain number of pixels, which is a digital image, and may be a transmission image or a reconstructed tomographic image. The resulting image is stored as a private dot-based format. This image is characterized by high definition, high number of pixels per unit, and large image footprint.

In a large inspection system such as customs inspection stations, a storage capacity for an X-ray image of the container truck is about 30-60 Mbytes. Such massive image data brings new challenges to both storage and reading technologies. Thus, there is a need to improve image storage and reading efficiency.

### SUMMARY

In view of one or more problems in the prior art, a security inspection system and method thereof are proposed, which can improve an efficiency for reading a radiographic image.

According to an aspect of the present disclosure, there is provided a security inspection system, comprising: at least one inspection sub-system, configured to perform a ray scanning on an object to be inspected, and obtain a radiographic image data of the object; and at least one local computer, communicatively coupled to the at least one inspection sub-system, and configured to store the radiographic image data, wherein the at least one local computer is further configured to divide the radiographic image data into a plurality of sub-regions according to a predefined pattern, store image data of respective sub-region in columns, and store information indicating relationships between respective sub-regions.

For example, the at least one local computer is disposed at an inspection site, and comprises a hardware device, an operating system and an image processing application, wherein the security inspection system further comprises: at least one remote image processing computer, communicatively coupled to the at least one local computer via at least one of a public network and a private network, and configured to log on the at least one local computer by remote access, synchronize screen data of the at least one local computer to the at least one remote image processing computer, and enable an operator of the at least one remote image processing computer to review the screen data.

For another example, the at least one local computer is further configured to store the image data of respective sub-region in an HBase database, and use a timestamp of respective sub-region to represent the information indicating relationships between respective sub-regions.

For another example, the at least one local computer is further configured to add a check field following a Value field of the HBase database, and calculate a checksum by using check field.

For another example, the at least one local computer is further configured to add a filler field following a Value field of the HBase database, and modify total bits of Key-Value bytes to a multiple of 8.

For another example, the image data of respective sub-region has a size less than a predetermined threshold.

For another example, the at least one local computer is further configured to store the information indicating relationships between positions of the respective sub-regions in the HBase database.

For another example, the sub-regions comprise a headstock, a body connection portion, a chassis and a compartment for a car.

According to another aspect of the disclosure, there is provided a method for security inspection, comprising steps of: performing a ray scanning on an object to be inspected, and obtaining a radiographic image data of the object; dividing the radiographic image data into a plurality of sub-regions according to a predefined pattern; and storing image data of respective sub-region in columns and information indicating relationships between respective sub-regions, in a local computer.

For example, the method further comprises steps of: establishing a communication connection between a remote image processing computer and the local computer; and synchronizing, by the remote image processing computer via remotely logging on the local computer, screen data of the local computer to the remote image processing computer.

For another example, the method further comprises steps of storing the image data of respective sub-region in an HBase database, and using a timestamp of respective sub-region to represent the information indicating relationships between respective sub-regions.

For another example, the method further comprises steps of adding a check field following a Value field of an HBase database and calculating a checksum by using the check field.

For another example, the method further comprises steps of adding a filler field following a Value field of an HBase database and modifying total bits of Key-Value bytes to a multiple of 8.

For another example, the method further comprises steps of reading the image data of respective sub-region in columns according to the information indicating relationships between respective sub-regions which is stored in a database, and synchronizing combined image data of at least two sub-regions to the remote image processing computer.

According to yet another aspect of the disclosure, there is provided a method for displaying a security image, comprising steps of: reading image data of each sub-region in columns according to information indicating relationships between respective sub-regions which is stored in a database; and displaying combined image data of at least two sub-regions on a screen.

For example, the method further comprises a step of: calculating a checksum after reading the image data.

Solutions according to the above embodiments may improve the efficiency for reading massive radiographic images.

### BRIEF DESCRIPTION OF THE DRAWINGS

In order to better understand the present disclosure, the present disclosure will be described in detail based on the following drawings:
Fig. 1 shows a structural block diagram illustrating a security inspection system according to an embodiment of the present disclosure;
Fig. 2 shows a schematic diagram illustrating a hardware structure of a computer according to an embodiment of the present disclosure;
Fig. 3 shows a schematic diagram illustrating a logical architecture of a computer according to an embodiment of the present disclosure;
Fig. 4 shows a schematic flow chart of a method for a security inspection system according to an embodiment of the present disclosure;
Fig. 5 shows a schematic flow chart of a method for displaying an image according to an embodiment of the present disclosure;
Fig. 6 shows a schematic diagram of an operation of dividing an X-ray image of a vehicle in a predefined pattern according to an embodiment of the present disclosure; and
Fig. 7 shows a schematic diagram of an operation of combining image data of respective sub-regions in a security inspection system according to another embodiment of the present disclosure.

### DETAILED DESCRIPTION

Embodiments of the present disclosure are described in detail below. It should be noted that the embodiments described herein are by way of illustration only and are not intended to limit the disclosure. In the following description, numerous specific details are set forth in order to provide a thorough understanding of the disclosure. However, it will be apparent to those skilled in the art that the present disclosure can be practiced without those specific details. In other instances, well-known structures, materials, or methods are not specifically described in order to avoid obscuring the disclosure.

Throughout the description, references to "one embodiment", "an embodiment", "one example" or "an example" mean that specific features, structures or characteristics described with reference to the refered embodiment or example can be comprised in at least one embodiment. Thus, the phrases "in one embodiment", "in an embodiment", "in one example" or "in an example" throughout the specification may be not referred to the same embodiment or example. Furthermore, the particular features, structures, or characteristics may be combined in one or more embodiments or examples in any suitable combination and/or subcombination. Moreover, it will be understood by those skilled in the art that the term "and/or" as used herein may comprise any and all combinations of one or more of related items listed.

Radiography is a technique that may use rays to observe an interior of an object. This technology can obtain information such as the structure and density of the object without destroying the object. It has been widely used in various fields such as health care, national economy, scientific research and the like. Chest fluoroscopy in a hospital and security inspection in station and airport are the most common examples in daily life. The most commonly used radiate rays are X-rays and gamma rays. At present, other radiations such as neutrons, protons, electrons, µ-mesons, heavy ions and the like have also been used more and more widely.

An image frame is a single picture having the smallest unit in an image animation, which is equivalent to each shot on a film. A single frame is a still image, and continuous frames form the image animation, such as a television image. Generally speaking, the number of frames is the number of image transmitted in one second, and it can also be understood as the times that a graphic processor enables to refresh per second, usually expressed by fps (Frames Per Second). Since each frame is a still image, an illusion of motion may be formed by displaying the frames rapidly and continuously. The higher the frame rate becomes, the more realistic the image animation will be. The greater the fps becomes, the smoother the displayed motion will be.

Digital-to-analog converter: A digital-to-analog converter, also known as D/A converter, referred to as DAC, is a device that converts digital quantities into analog quantities. The D/A converter substantially consists of four portions, i.e., a weighted resistor network, an operational amplifier, a reference power supply, and an analog switch. In addition, an analog-to-digital converter, also known as A/D converter, referred to as ADC, is a device that converts a continuous analog signal into a discrete digital signal.

Generally, there are about 30M-60M bytes required for an inspection image of a container. If the security inspection system operates in a dual-energy mode, then there are about 60-120M bytes for the inspection image. Further, if the security inspection system operates in a dual-energy and dual-view mode, then there are about 120-240M bytes for the inspection image. Considering the images and data generated by traffics, the overall volume is very large. To store and read such large data efficiently, new storage and reading techniques are needed.

In view of the above problems, embodiments of the present disclosure propose to store and describe an image by using a sub-region, including standard attributes such as image type, size, region, creation time, modification time, and application-related attributes such as image type, sub-region type, sub-region bit depth, sub-region size, sub-region continuity and the like.

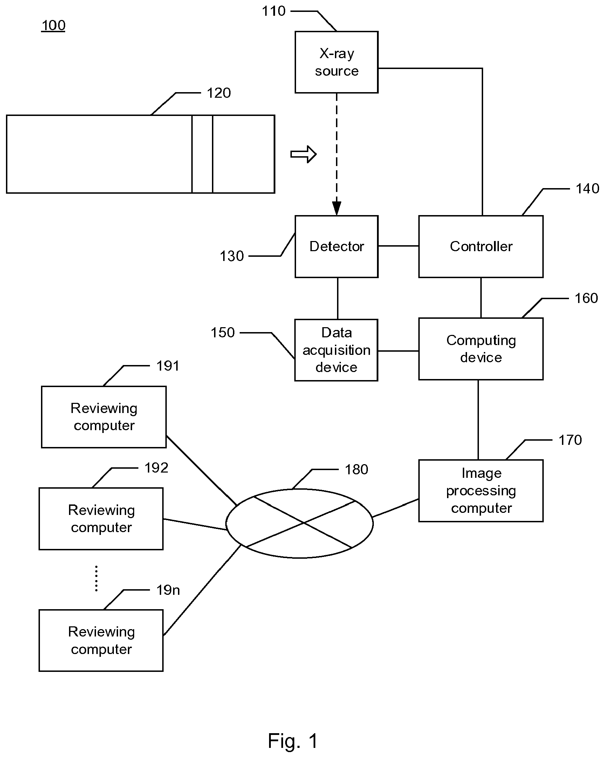

Fig. 1 shows a structural block diagram illustrating a security inspection system 100 according to an embodiment of the present disclosure. As shown in Fig. 1, the security inspection system 100 according to the embodiment of the present disclosure includes an X-ray source 110, a detector 130, a data acquisition device 150, a controller 140, and a computing device 160. The security inspection system 100 is configured to perform a security inspection on an object to be inspected 120, such as a container truck, so as to determine that whether any dangerous goods or suspicious items are included. Although the detector 130 and the data acquisition device 150 are separately described in this embodiment, those skilled in the art will appreciate that they may also be integrated together as an X-ray detection and data acquisition device.

According to some embodiments, the X-ray source 110 described above may be an isotope, an X-ray machine or an accelerator and the like. The X-ray source 110 can be single energy materials or dual energy materials. Thus, the security inspection can be performed on the object 120 through the X-ray source 110, the detector 150, the controller 140 and the computing device 160, so as to obtain detecting data. For example, during the traveling of the object 120, the operator sends an instruction through the controller 140 with the aid of a human-computer interaction interface of the computing device 160. The instruction indicates the X-ray source 110 to emit radiate rays, which is received by the detector 130 after passing through the object 120, and then converted into an electrical signal. The electrical signal is then converted to a digital signal by the data acquisition device 150, which is then processed by the computing device 160. This makes it possible to obtain a transmission image of the object 120.

As shown in Fig. 1, the transmission image is transmitted to the local on-site image processing computer 160 via local routes. The on-site image processing computer 160 is coupled to remotely deployed reviewing computers 191, 192, and 19n via a public network or a private network 180, such as remote image processing computers deployed at the reviewing center which are also connected to the public network or the private network.

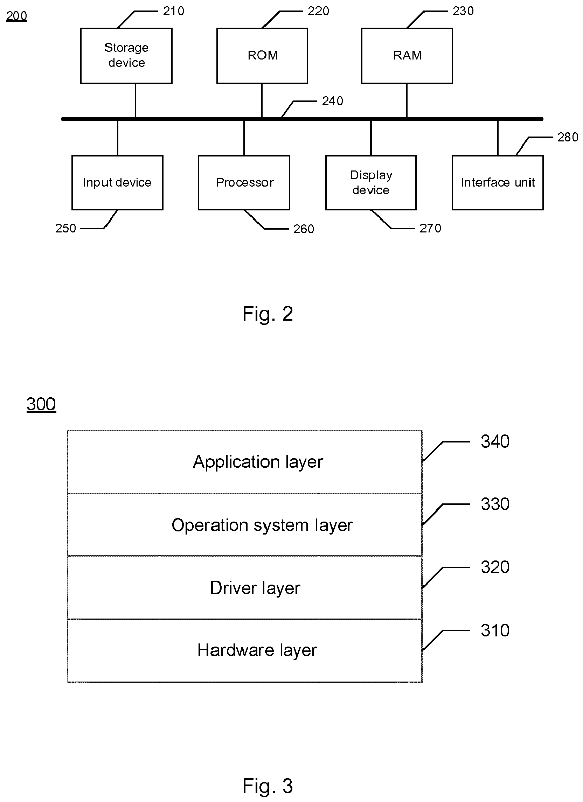

Fig. 2 shows a schematic diagram illustrating a hardware structure of a computer 200. As shown in Fig. 2, the signals detected by the detector 130 are collected by a data acquisition device, and stored in a storage device 210 through an interface unit 280 and a bus 240. A read only memory (ROM) 220 is used to store configuration information and programs of a data processor of the computer device. A random access memory (RAM) 230 is used to temporarily store various data during the operation of a processor 260. In addition, computer programs for performing data processing such as a substance recognition program, an image processing program and the like are also stored in the memory 210. The bus 240 is connected to the memory 210, the read only memory 220, the random access memory 230, an input device 250, the processor 260, the display device 270, and the interface unit 280 above-described.

After the user inputs an operation command through the input device 250 such as a keyboard and a mouse, the instruction code of the computer program directs the processor 260 to execute a predetermined data processing algorithm. After obtaining a data processing result, the data processing result is displayed on the display device 270, for example, an LCD display. Alternatively, the data processing result is output directly in a form of a hard copy such as printing.

Fig. 3 shows a schematic diagram illustrating a logical architecture of a computer 300 according to an embodiment of the present disclosure. As shown in Fig. 3, the computer (computing device) according to the embodiment of the present disclosure may have a four-layer logical structure, such as a hardware layer 310, a driver layer 320, an operating system layer 330, and an application layer 340. For example, the hardware layer 310 includes various hardware shown in Fig. 2, such as the CPU, the input device, the storage device and the like. The driver layer 320 includes driving programs for driving the various hardware described above, and is configured to establish a bridge between the hardware layer and the operating system, so that hardware can be operated by software, such as input/output and the like. The operating system may be an operating system such as Windows or Linux, which receives external input, allocates threads or resources, processes data or events, and outputs the processing results. For example, the operating system has a remote login function that enables remote computers to log on and can also log on other remote computers. The application layer 340 is, for example, an image processing program used for such as edge enhancement, local enhancement and gray scale stretching, and can process an X-ray image according to a user's operation to obtain a processed result.

Thus, as shown in Fig. 1, a security inspection sub-system including, for example, the X-ray source 110, the detector 130, the data acquisition device 150, the controller 140, and the computing device 160 is deployed on-site at a customs inspection, so as to perform a ray scanning on the object to be inspected 120 and obtain a radiographic image data of the object.

The on-site deployed image processing computer 170 may comprise hardware devices, an operating system, and an image processing application, and is in communication with the security inspection sub-system, so as to store and process X-ray images in real time.

A reviewing computer (image processing computer) 191, 192, 19n deployed remotely is communicatively coupled to the on-site deployed image processing computer 170 via a public network and/or a private network, and configured to log on the image processing computer 170 by remote access, synchronize screen data of the on-site deployed image processing computer 170 to the remote image processing computer 191, 192, 19n, and enable an operator of the remote image processing computer 191, 192, 19n to review the screen data. In this manner, since only the screen data is synchronized to the remote reviewing computer, it is possible to review the radiographic image data of the object 120 without transmitting all of the radiographic image data of the object 120 to the remote reviewing computer.

In the above-described process of storing images, the embodiments of the present disclosure propose a distributed storage scheme which stores the images column-by-column. For example, in the process of image acquisition, different patterns can be predefined for different types of vehicles. For example, for a container vehicle, it can be divided into four regions, i.e., a headstock, a body connection portion, a chassis and a compartment. Those skilled in the art can understand that other patterns can also be adopted for other applications.

For example, by storing image attribute information and image content in a large table, a multi-attribute comprehensive query on the image can be supported. In addition, according to application requirements, sub-region clusters can be extended to store application-related information, so that application-related queries can be flexibly supported. It can be seen that the mass image storage technology based on sub-region not only solves the image storage problem, but also realizes a flexible image sub-region retrieval, and facilitates targeted training on different regions of the image by using machine learning. Especially for large-size images generated by radioactive rays, due to the storage pattern for a characteristic region, the image training factor is greatly reduced, the image training speed is improved, which further improves the image training result and the overall image recognition efficiency.

For example, the storage of images is implemented by using an Hbase data structure. In particular, a check field and a filler field have been added. In this way, it is possible to check the correctness of the image data and enable to align the Key-Value byte array, improving read and write efficiency. Specifically, the storage structure for the Key-Value is improved, and the check and filler fields are added after the Value field. The checksum is 8 bytes (64 bits). By adding the filler field, each Key-Value byte array can be modified to an integer multiple of 8 bytes, which is more suitable for 64-bit systems. After the above modification, the data must be changed when being read and written.

Thus, in writing data, the checksum for the Value field is firstly calculated, and written into the check field. Then, the total size of the Key-Value byte array is calculated. If the total size is not an integer multiple of 8, a certain number of 0x00 bytes are stored in the filler field, such that the total size is an integer multiple of 8.

In reading data, after reading the Key and Value fields, the checksum for the Value field is calculated, and is then compared with the value stored in the check field. If the calculated checksum is equivalent to the value stored in the check field, it is indicated that the Value is read correctly.

In addition, according to the HBase-based mass image storage technology, the unit for the storage region can be set to be less than a threshold. For example, the recommended data block does not exceed 1M at most. In specific application scenarios, even if most of the images are within 1M, there may be a small number of images exceeding 1M, which requires changes to the HBase-based mass image storage technology. For example, a file having a size greater than the limit of the data block is divided into slices, so that each slice has a size smaller than the limit, and then stored.

Furthermore, the embodiments of the present disclosure propose to record all sub-regions of the same image and record the order of the sub-regions, so as to recover the image. Specifically, the TimeStamp in the Key-Value byte array of the HFile cell is used. That is, the TimeStamp is used to record the order for storage. All sub-regions of the image are stored with the same RowKey and Family (corresponding to the nature of the sub-region). The types of family may comprise the headstock, the body connection portion, the chassis and the compartment for a vehicle. In this way, all the sub-regions from the same image can be found by using RowKey+Family. Then, the original image can be restored by merging the sub-regions of the image together according to the time sequence of each sub-region TimeStamp. In other embodiments, in addition to storing TimeStamp information, information indicating relationships between positions of the respective sub-regions in the HBase database, such as information indicating that the data of the compartment is above the chasis, may be stored. This makes it possible to accurately combine the sub-regions after reading the data, which is convenient for reviewing the drawings.

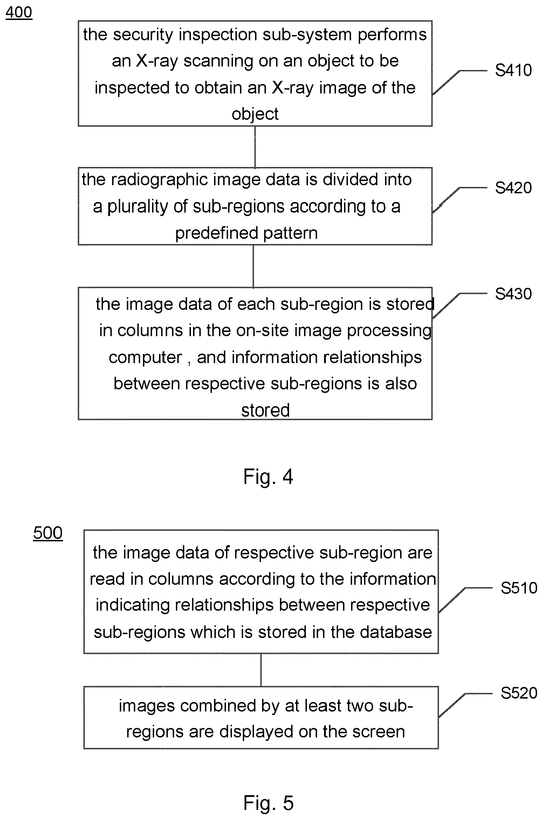

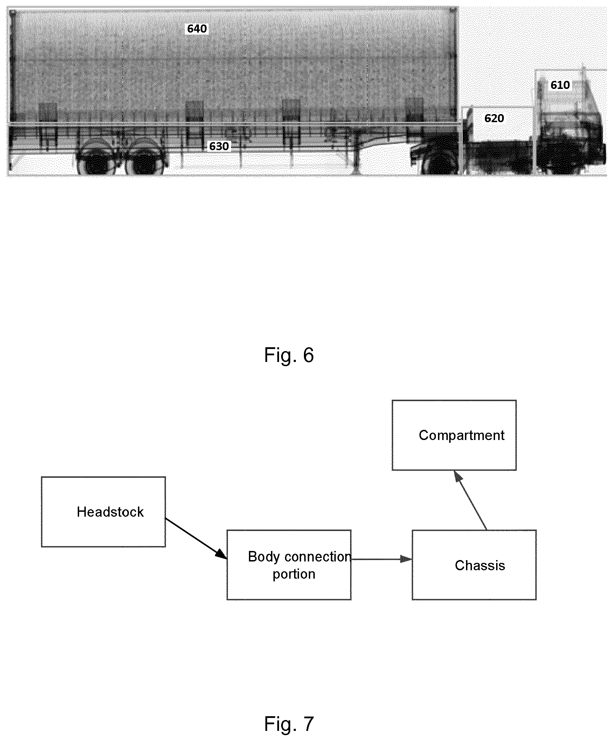

Fig. 4 shows a schematic flow chart of a method for a security inspection system according to an embodiment of the present disclosure. Fig. 6 shows a schematic diagram of an operation of dividing an X-ray image of a vehicle in a predefined pattern according to an embodiment of the present disclosure. As shown in Fig. 6, a vehicle image is divided into a headstock 610, a body connection portion 620, a chassis 630 and a compartment 640 for a vehicle.

As shown in Fig. 4, in step S410, the security inspection sub-system deployed at the customs inspection in various places may perform an X-ray scanning on an object to be inspected, for example, a transmission scanning on the container truck, to obtain an X-ray image of the object. In step S420, the radiographic image data is divided into a plurality of sub-regions according to a predefined pattern, such as the headstock 610, the body connection portion 620, the chassis 630 and the compartment 640. The above-described operations are performed at the on-site image processing computer 170. In step S430, the image data of each sub-region is stored in columns in the on-site image processing computer 170, and information relationships between respective sub-regions is also stored in the on-site image processing computer 170. For example, image data of the headstock 610, the body connection portion 620, the chassis 630 and the compartment 640 are stored in columns, and time stamp information of each sub-region is recorded.

Accordingly, the on-site image processing computer 170 is configured to store the image data of each sub-region in the HBase database, and use the time stamp of each sub-region to represent information reflecting the relationship between the respective sub-regions. For example, the check field is added after the Value field of an HBase database, for calculating the checksum. For another example, the filler field is added after the Value field of the HBase database, for modifying total bits of Key-Value bytes to a multiple of 8.

Fig. 5 shows a schematic flow chart of a method for displaying an image according to an embodiment of the present disclosure. Fig. 7 shows a schematic diagram of an operation of combining image data of respective sub-regions in a security inspection system according to another embodiment of the present disclosure.

As shown in Fig. 5, before the image data is transferred from the on-site image processing computer to the remote image processing computer, it should be read from the data storage database HBase. In step S510, the image data of respective sub-region are read in columns according to the information indicating relationships between respective sub-regions which is stored in the database. For example, based on the time stamp information stored in advance, the image data of each sub-region is read in columns in chronological order. The image data of the sub-regions are combined together. In this process, if the positional relationships between the respective sub-regions stored in advance are required, the sub-regions are further combined according to the positional relationship.

In step S520, images combined by at least two sub-regions are displayed on the screen. Then the screen data is synchronized to the remote image processing computer. As described above, the checksum calculation can be performed after the image data is read, which ensures the correctness of the read data.

The above storage technology or method can bring a qualitative leap to the generation and storage of the radiographic images, so that the generated image can meet the requirements of distributed storage and big data depth calculation, and it can also provide basic support for intelligent image analysis and recognition. The technology or method according to the embodiments of the present disclosure can also be used in other fields. According to the requirements of displaying and analysis different image regions discriminatively, the images can be divided and described in the predefined pattern, which may facilitate in the subsequent calculation and depth analysis.

The numerous embodiments of the security inspection system and method have been described using schematics, flowcharts, and/or examples. In the event that such schematics, flowcharts, and/or examples include one or more functions and/or operations, those skilled in the art will appreciate that each function and/or operation in such a schematic, flowchart, or example may be implemented separately and/or together by various structures, hardware, software, firmware or virtually any combination thereof. In one embodiment, portions of the subject matter of embodiments of the disclosure may be implemented by an application specific integrated circuit (ASIC), field programmable gate array (FPGA), digital signal processor (DSP), or other integrated format. However, those skilled in the art will appreciate that some aspects of the embodiments disclosed herein may be implemented in an integrated circuit as a whole or in part. It can also be implemented as one or more computer programs running on one or more computers (e.g., implemented as one or more programs running on one or more computer systems), one or more programs running on one or more processors (e.g., implemented as one or more programs running on one or more microprocessors), firmware, or substantially in any combination of the above. Those skilled in the art, in accordance with the present disclosure, will be provided with the capability of designing circuitry and/or writing software and / or firmware codes in. Moreover, those skilled in the art will recognize that the mechanisms of the subject matter described herein can be distributed as various forms of program products. The exemplary embodiments of the subject matter of the present disclosure are applicable regardless of the particular type of signal-bearing media that is actually used to perform the distribution. Examples of signal-bearing media may include, but are not limited to, recordable media such as floppy disks, hard drives, compact disks (CDs), digital versatile disks (DVDs), digital tapes, computer memories, and the like; and transmission-type media such as digital and / or analog communication media (e.g., fiber optic cable, waveguide, wired communication link, wireless communication link, etc.).

While the disclosure has been described with reference to the exemplary embodiments, it should be understood that the terminology described herein is only used for illustration but not for limitation. Since the present disclosure may be embodied in a variety of forms without departing from the spirit or scope of the invention, it is to be understood that the above-described embodiments are not limited by any of above details, and all changes and modifications that come within the scope of the claims or the equivalents thereof are intended to be covered by the appended claims.

## Claims

1. A security inspection system, comprising:
at least one inspection sub-system, configured to perform a ray scanning on an object to be inspected, and obtain a radiographic image data of the object; and
at least one local computer, communicatively coupled to the at least one inspection sub-system, and configured to store the radiographic image data,
wherein the at least one local computer is further configured to divide the radiographic image data into a plurality of sub-regions according to a predefined pattern, store image data of respective sub-region in columns, and store information indicating relationships between respective sub-regions.

2. The security inspection system of claim 1, wherein the at least one local computer is disposed at an inspection site, and comprises a hardware device, an operating system and an image processing application,
wherein the security inspection system further comprises:
at least one remote image processing computer, communicatively coupled to the at least one local computer via at least one of a public network and a private network, and configured to log on the at least one local computer by remote access, synchronize screen data of the at least one local computer to the at least one remote image processing computer, and enable an operator of the at least one remote image processing computer to review the screen data.

3. The security inspection system of claim 1, wherein the at least one local computer is further configured to store the image data of respective sub-region in an HBase database, and use a timestamp of respective sub-region to represent the information indicating relationships between respective sub-regions.

4. The security inspection system of claim 3, wherein the at least one local computer is further configured to add a check field following a Value field of the HBase database, and calculate a checksum by using check field.

5. The security inspection system of claim 3, wherein the at least one local computer is further configured to add a filler field following a Value field of the HBase database, and modify total bits of Key-Value bytes to a multiple of 8.

6. The security inspection system of claim 3, wherein the image data of respective sub-region has a size less than a predetermined threshold.

7. The security inspection system of claim 3, wherein the at least one local computer is further configured to store the information indicating relationships between positions of the respective sub-regions in the HBase database.

8. The security inspection system of claim 1, wherein the sub-regions comprise a headstock, a body connection portion, a chassis and a compartment for a car.

9. A method for security inspection, comprising steps of:
performing a ray scanning on an object to be inspected, and obtaining a radiographic image data of the object;
dividing the radiographic image data into a plurality of sub-regions according to a predefined pattern; and
storing image data of respective sub-region in columns and information indicating relationships between respective sub-regions, in a local computer.

10. The method of claim 9, further comprising steps of:
establishing a communication connection between a remote image processing computer and the local computer; and
synchronizing, by the remote image processing computer via remotely logging on the local computer, screen data of the local computer to the remote image processing computer.

11. The method of claim 9, further comprising steps of storing the image data of respective sub-region in an HBase database, and using a timestamp of respective sub-region to represent the information indicating relationships between respective sub-regions.

12. The method of claim 9, further comprising steps of adding a check field following a Value field of an HBase database and calculating a checksum by using the check field.

13. The method of claim 9, further comprising steps of adding a filler field following a Value field of an HBase database and modifying total bits of Key-Value bytes to a multiple of 8.

14. The method of claim 10, further comprising steps of reading the image data of respective sub-region in columns according to the information indicating relationships between respective sub-regions which is stored in a database, and synchronizing combined image data of at least two sub-regions to the remote image processing computer.

15. A method for displaying a security image, comprising steps of:
reading image data of each sub-region in columns according to information indicating relationships between respective sub-regions which is stored in a database; and
displaying combined image data of at least two sub-regions on a screen.

16. The method of claim 15, further comprising a step of:
calculating a checksum after reading the image data.
